Europäisches Patentamt

European Patent Office

Office européen des brevets

(19)

(11) EP 1 222 147 B1

(12) EUROPÄISCHE PATENTSCHRIFT

(45) Veröffentlichungstag und Bekanntmachung des Hinweises auf die Patenterteilung:
16.07.2003 Patentblatt 2003/29

(21) Anmeldenummer: 00975828.5

(22) Anmeldetag: 09.10.2000

(51) Int Cl.⁷: $C03B\ 19/10$, $B29B\ 9/10$, $C04B\ 35/653$

(86) Internationale Anmeldenummer:
PCT/DE00/03558

(87) Internationale Veröffentlichungsnummer:
WO 01/028940 (26.04.2001 Gazette 2001/17)

(54) **VERFAHREN UND VORRICHTUNG ZUR HERSTELLUNG VON AUS IM WESENTLICHEN SPHÄRISCHEN PARTIKELN GEBILDETEN PULVERN**

METHOD AND DEVICE FOR PRODUCING POWDERS THAT CONSIST OF SUBSTANTIALLY SPHERICAL PARTICLES

PROCEDE ET DISPOSITIF PERMETTANT DE PRODUIRE DES POUDRES COMPOSEES DE PARTICULES SENSIBLEMENT SPHERIQUES

(84) Benannte Vertragsstaaten:
AT BE CH CY DE DK ES FI FR GB GR IE IT LI LU MC NL PT SE

(30) Priorität: 15.10.1999 DE 19949872
20.01.2000 DE 10002394

(43) Veröffentlichungstag der Anmeldung:
17.07.2002 Patentblatt 2002/29

(73) Patentinhaber: APPLIKATIONS- UND TECHNIKZENTRUM FÜR ENERGIEVERFAHRENS-, UMWELT-, UND STRÖMUNGSTECHNIK
92237 Sulzbach-Rosenberg (DE)

(72) Erfinder:
• WOLF, Gerhard
  D-92242 Hirschau (DE)
• EMMEL, Andreas
  D-92256 Hahnbach (DE)

(74) Vertreter: Gassner, Wolfgang, Dr.
Patentanwalt,
Nägelsbachstrasse 49a
91052 Erlangen (DE)

(56) Entgegenhaltungen:
EP-A- 0 046 376          BE-A- 495 779
US-A- 2 044 680          US-A- 3 294 511

**Beschreibung**

Die Erfindung betrifft ein Verfahren und eine Vorrichtung zur Herstellung von aus im Wesentlichen sphärischen Partikeln gebildeten Pulvern aus einem Material, wie Glas, Keramik oder Kunststoff.

Die DE-OS 1 758 844 betrifft ein Verfahren zur Gewinnung von feindispersen Metall- und Legierungspulvern. Dabei wird ein von einer Düse injizierter Strahl geschmolzenen Metalls mittels eines Warmgasstroms zerstäubt. Die Temperatur des Warmgasstroms ist niedriger als die der Erstarrungstemperatur des injizierten Metalls.

Aus der DE 33 11 343 A1 ist ebenfalls ein Verfahren zur Herstellung feiner Metallpulver bekannt. Der Metallschmelzenstrom wird hierbei durch ein mit Überschallgeschwindigkeit strömendes Gas zerstäubt. Das Gas hat vor dem Austritt aus der Düse eine Temperatur im Bereich zwischen dem 0,7 bis 1,5-fachen der Erstarrungstemperatur des Metalls. Die Temperatur des Gases nach dem Austritt aus der Düse liegt infolge seiner Expansion deutlich unterhalb der Erstarrungstemperatur des Metalls.

In der DE 43 19 990 A1 ist ein Verfahren zur Herstellung von Teilchen aus Kunststoffen offenbart. Dabei wird ein viskoser Massestrom in eine Zerstäubungsvorrichtung gefördert und dort mit einem unter Druck stehenden Gas angespritzt. Als Gas wird hier tiefkaltverflüssigtes inertes Gas verwendet.

Die DE 35 33 964 C1 betrifft ein Verfahren zum Herstellen von Feinstpulver in Kugelform. Dabei werden u.a. Keramik-Schmelzen durch eine beheizte Laval-Düse geführt. Die Schmelze liegt unmittelbar vor dem Austritt aus der Düse im überhitzten Zustand vor.

In der DE 39 13 649 C2 ist ein Verfahren zum Herstellen metallischer Pulver aus einer Metallschmelze durch Gasverdüsen beschrieben. Bei dem Verfahren wird zur Einstellung einer vorgegebenen Korngrößenverteilung die Temperatur und/oder der Druck des Gases variiert.

Die DE 40 23 278 A1 beschreibt ein Verfahren zur Herstellung von Metalloxidpulvern. Dabei wird die Schmelze beim Zerstäubungsvorgang mit Sauerstoff beaufschlagt. Die Metallpulver werden dadurch oxidiert.

Bei einem aus der US-A-3 294 511 bekannten Verfahren tritt die Schmelze am Boden einer Schmelzwanne aus. Es bildet sich ein vertikaler Schmelzstrahl, der erst nach einer Entfernung etwa im rechten Winkel mit heißen Gasen eines Brenners beaufschlagt wird.

Die bekannten Verfahren eignen sich nicht zur Herstellung von aus sphärischen Partikeln gebildeten Pulvern aus einer hochviskosen Schmelze. Auf Grund hoher Viskosität bilden sich bei der Verdüsung und Erstarrung faserförmige Teilchen, so genannte Ligamente, oder grobe unregelmäßige Partikel.

Aufgabe der Erfindung ist es, die Nachteile nach dem Stand der Technik zu beseitigen. Es sollen insbesondere ein Verfahren und eine Vorrichtung angegeben werden, mit denen eine Herstellung von aus im Wesentlichen sphärischen Partikeln gebildeten Pulvern aus einer hochviskosen, insbesondere glasartig erstarrenden, Schmelze möglich ist.

Diese Aufgabe wird durch die Merkmale der Ansprüche 1 und 17 gelöst. Zweckmäßige Ausgestaltungen ergeben sich aus den Merkmalen der Ansprüche 2 bis 16 und 18 bis 21.

Nach Maßgabe der Erfindung ist ein Verfahren zur Herstellung von aus im Wesentlichen sphärischen Partikeln gebildeten Pulvern aus einem Material, wie Glas, Keramik oder Kunststoff, das eine hochviskose entweder bei einer Glasbildungstemperatur $T_g$ oder bei einer Erstarrungstemperatur $T_s$ erstarrende Schmelze bildet, mit folgenden Schritten vorgesehen:

a) Herstellen einer Schmelze mit einer dynamischen Viskosität $\eta$ im Bereich zwischen 0,01 und 100 $Ns/m^2$,

b) Verdüsen der Schmelze unter Verwendung eines ersten Gases, wobei das erste Gas am Austritt eines Ringspalts einer Ringdüse mindestens eine Temperatur $T_A \geq T_g$ bzw. $\geq 0,5\ T_s$ hat, wobei der Ringspalt eine einen Schmelzstrahl freigebende Düse umgibt, und wobei der Anstellwinkel des ersten Gases in Bezug zur Schmelzstrahlachse bis zu 25 Grad beträgt.

c) Abkühlen der beim Verdüsen gebildeten Partikel in einer stromabwärts der Ringdüse nachgeschalteten Abkühlungszone unter Verwendung eines Kühlmittels, wobei die Temperatur des Kühlmittels $< T_g$ bzw. $T_s$ ist.

Das erfindungsgemäße Verfahren ermöglicht die Herstellung von aus im Wesentlichen sphärischen Partikeln gebildeten Pulvern aus einem Material, wie z. B. Glas, Keramik oder Kunststoff. Solche Materialien bilden Schmelzen mit einer höheren Viskosität als Metallschmelzen; deren dynamische Viskosität liegt bei mindestens 0,01 $Ns/m^2$. Die Schmelzen sind in der Regel überhitzt. Die Temperatur der Schmelze ist im Falle glasartig erstarrender Schmelzen üblicherweise $\geq 1,5\ T_g$ und im Falle kristallin erstarrender Schmelzen etwa 100K höher als $T_s$. Die Beaufschlagung mit erstem Gas einer Austrittstemperatur von $T_A \geq T_g$ bzw. $\geq 0,5\ T_s$ ermöglicht das Einformen sphärischer Partikel. Die Bildung insbesondere von faserförmigen Erstarrungsteilchen, groben oder unregelmäßig geformten Partikeln wird vermieden.

Nach einer vorteilhaften Ausgestaltung ist die Temperatur des ersten Gases $\geq 1,5\ T_g$ bzw. $\geq 1,0\ T_s$. Die Wahl der Temperatur des ersten Gases hängt vom zu verdüsenden Material ab. Es ist zweckmäßig, dass die Temperatur des ersten Gases am Austritt der Ringdüse im Bereich von $\pm$ 100 K der Erstarrungstemperatur $T_s$ des Materials liegt.

Im Falle der Herstellung von Kunststoffpulvern ist selbstverständlich darauf zu achten, dass die Temperatur des ersten Gases stets unterhalb der Zersetzungstemperatur des Kunststoffs liegt. Die Temperatur des ersten Gases liegt hier vorzugsweise im Erstarrungsbereich $T_g$, zweckmäßigerweise jedoch etwa 50 K unterhalb des Erstarrungsbereichs $T_g$, des Kunststoffs.

Als erstes Gas wird zweckmäßigerweise Luft, Stickstoff, Edelgas, Sauerstoff oder ein Gemisch daraus verwendet. Besonders wirtschaftlich ist es, das erste Gas mittels eines Pebble-Heaters bzw. Schüttgut-Heizers vorzuheizen. Nach einem weiteren Ausgestaltungsmerkmal des Verfahrens wird der Gasdurchsatz auf einen Wert zwischen 0,1 und 10 m³/min eingestellt. Unter "m³" werden dabei Normkubikmeter verstanden. Zur Zerstäubung kann der Druck des ersten Gases auf einen Wert von 1 bis 50 bar eingestellt werden. Die Wahl des Durchsatzes sowie des Drucks des ersten Gases, richtet sich wiederum nach dem zu verdüsenden Material.

Der stromabwärts der Düse gebildete Partikelstrom gelangt in eine Abkühlungszone. Als Kühlmittel wird ein zweites Gas oder Wasser verwendet. Bei dem zweiten Gas kann es sich um kryogenes verflüssigtes Gas handeln. Das Kühlmittel kann entgegen der Stromrichtung des Partikelstroms in Richtung der Ringdüse eingeblasen werden. Es ist aber auch möglich, das Kühlmittel zur Führung des Partikelstroms in Stromrichtung zuzuführen. Zum Einblasen des Kühlmittels sind stromabwärts der Düse weitere Düsen vorgesehen. Insbesondere bei Schmelzen sehr hoher Viskosität von mehr als 1 Ns/m² kann durch die weiteren Düsen anstelle von Kühlmittel auch heißes erstes Gas eingeblasen werden, um die sphärische Einformung zu unterstützen.

Als weiteres Kühlmittel kann stromabwärts ein aus kryogenem verflüssigtem Gas oder Wasser gebildetes Bad vorgesehen sein. Die Partikel fallen in dieses Bad, werden abgekühlt und schließlich abgetrennt.

Weiterhin ist es zweckmäßig, den stromabwärts der Düse in deren Nähe sich ausbildenden Partikelstrom im Wesentlichen horizontal zu führen. Der Partikelstrom wird vorteilhafterweise entfernt von der Ringdüse in eine im Wesentlichen vertikale Richtung umgelenkt. Die Führung und/oder Umlenkung des Partikelstroms kann durch das Einblasen von Kühlmittel unterstützt werden. Auf diese Weise wird ein besonders langer Abkühlungsweg gebildet, der die Ausbildung von sphärischen Partikeln ermöglicht.

Nach einem weiteren Ausgestaltungsmerkmal ist es beim Verfahren möglich, dass das erste Gas, ggf. ein aus dem ersten Gas und dem Kühlmittel gebildetes Mischgas, abzuführen und zum Vorheizen eines zweiten Pebble-Heaters zu verwenden. Falls zum Vorheizen des ersten Gases der zweite Pebble-Heater benutzt wird, kann die Wärme des ersten Gases recyclierend genutzt werden.

Zur Durchführung des erfindungsgemäßen Verfahrens ist eine Vorrichtung vorgesehen mit

> aa) einer Einrichtung zum Vorwärmen eines ersten Gases,

> bb) einem Behälter zur Aufnahme einer Schmelze,

> cc) mit einer zu einem Zerstäubungsraum weisenden im Wesentlichen horizontal angeordneten Ringdüse, bei der eine einen Schmelzstrahl freigebende Düse von einem Ringspalt umgeben ist, durch den das erste Gas in einem Anstellwinkel von bis zu 25 Grad in Bezug zur Schmelzstrahlachse austritt,

> dd) einer Einrichtung zum Kühlen eines stromabwärts der Ringdüse sich ausbildenden Partikelstroms,

> ee) wobei die Düse im Wesentlichen horizontal angeordnet ist und

> ff) eine Einrichtung zum Führen und/oder Umlenken des Partikelstroms in eine im Wesentlichen vertikale Richtung vorgesehen ist.

Die Vorrichtung ermöglicht die Herstellung von aus im Wesentlichen sphärischen Partikeln gebildeten Pulvern aus einer hochviskosen, insbesondere glasartig erstarrenden, Schmelze.

Vorteilhafterweise ist die Einrichtung zum Führen und/oder Umlenken wahlweise über einen vorgegebenen Abschnitt mit heißem ersten Gas beaufschlagbar. Das ermöglicht es, die Abkühlungsdauer und damit die Sphäroidisierungszeit der Partikel zu beeinflussen.

Es hat sich als zweckmäßig und wirtschaftlich erwiesen, dass die Einrichtung zum Vorwärmen ein Pebble-Heater ist. Die Düse kann eine Ringdüse, z.B. eine Laval-Düse, sein. Dabei ist zweckmäßigerweise die Breite des zum Austritt des ersten Gases vorgesehenen Ringspalts veränderbar. Der Anstellwinkel des ersten Gases in Bezug zur Schmelzstrahlachse bis zu 25°, vorzugsweise zwischen 10° und 20°, betragen. Das ermöglicht eine besonders effektive Zerstäubung des Schmelzstrahls. Weiter hat es sich als zweckmäßig erwiesen, den Schmelzstrahl möglichst eng zu führen. Die Wärmeabfuhr vom heißen Verdüsungsstrahl an die kältere Umgebung ist dann besonders gering. Die Schmelze bleibt auch nach dem Austritt aus der Düse ausreichend niedrig viskos, so daß die Bildung sphärischer Partikel ermöglicht ist.

Nachfolgend werden anhand der Zeichnung die Grundlagen sowie ein Ausführungsbeispiel der Erfindung näher erläutert. Es zeigen

Fig. 1    die Viskosität von Schmelzen verschiedener Materialien aufgetragen über der Temperatur,

Fig. 2　die Sphäroidisierungszeit verschiedener Materialien aufgetragen über den Partikelradius,

Fig. 3　eine schematische Darstellung einer erfindungsgemäßen Vorrichtung.

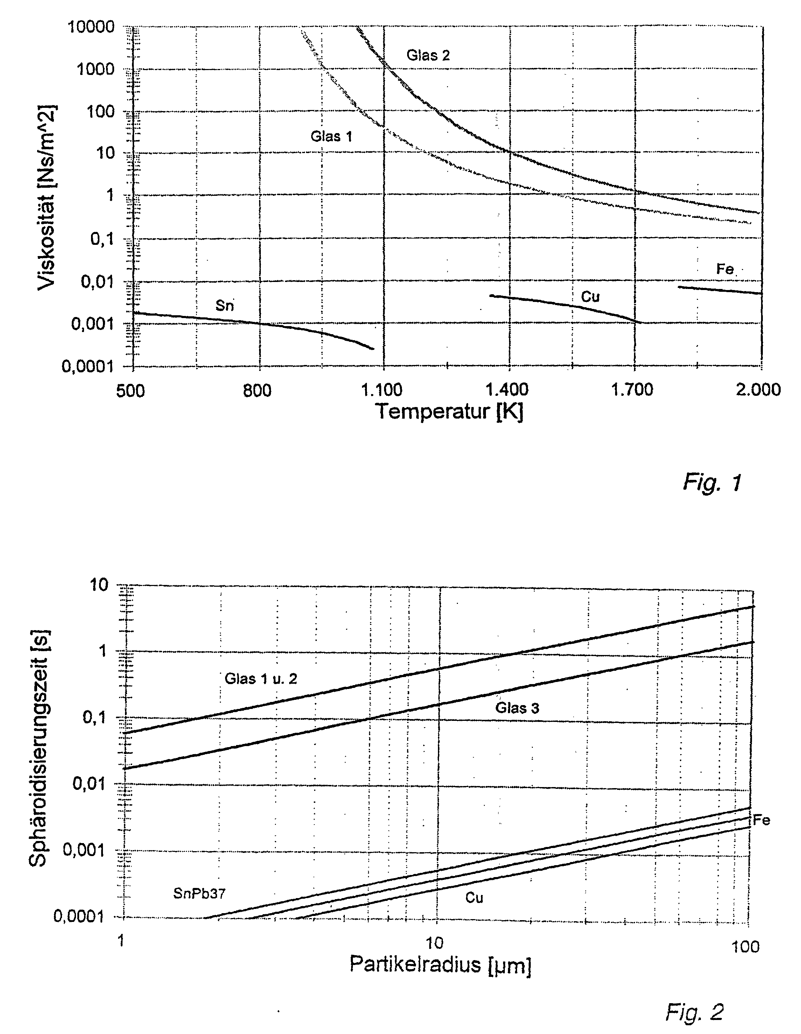

In Fig. 1 ist die Viskosität verschiedener Metalle, nämlich Eisen, Kupfer und Zinn, sowie verschiedener Gläser als Funktion der Temperatur aufgetragen. Die Viskosität von Metallschmelzen liegt unterhalb einem Wert von 0,01 Ns/m$^2$. Demgegenüber, weisen die hier unter dem Begriff "hochviskose Schmelzen" bezeichneten Schmelzen, eine Viskosität von mehr als 0,01 Ns/m$^2$ auf. Insbesondere die hier dargestellten Glasschmelzen zeichnen sich ferner dadurch aus, daß deren Viskosität mit fallender Temperatur stark, d.h. über mehrere Zehnerpotenzen, ansteigt.

In Fig. 2 ist die Sphäroidisierungszeit, d.h. die benötigte Zeit für die Einformung eines irregulär geformten Schmelzpartikels zur Kugelform, für verschiedene Metalle und Gläser als Funktion der Partikelgröße gezeigt. Für die Sphäroidisierungszeit $T_{sph}$ gilt:

$$T_{sph} \sim \eta/\sigma.$$

, wobei η die dynamische Viskosität und σ die Oberflächenspannung ist.

Wie aus Fig. 2 ersichtlich ist, liegt bei vergleichbarem Partikelradius die Sphäroidisierungszeit glasartig erstarrender Materialien mehr als zwei Zehnerpotenzen höher als die Sphäroidisierungszeit bei Metallen. Typisch für hochviskose Schmelzen gemäß der vorliegenden Erfindung sind Sphäroidisierungszeiten von mehr als 0,01 sek. bei einem Partikelradius von 1,0 μm.

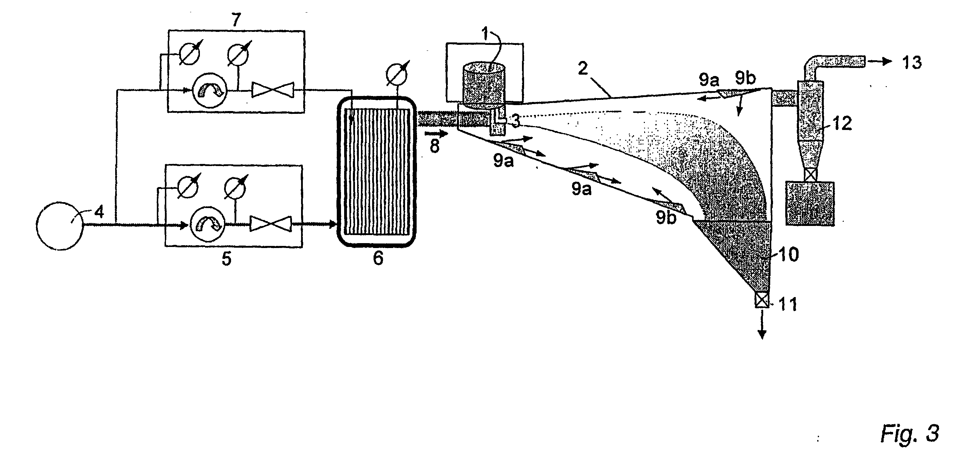

Fig. 3 zeigt ein Ausführungsbeispiel einer erfindungsgemäßen Verdüsungsanlage zur Zerstäubung hochviskoser Schmelzen. Eine Schmelzvorrichtung ist mit 1, eine Zerstäubungskammer mit 2 bezeichnet. Eine Ringdüse 3 ist über einen Zulaufkanal mit der Schmelzvorrichtung 1 verbunden. Ein erstes Gas befindet sich in einem Druckvorratstank 4. Das erste Gas kann über eine erste Gasentspannungseinrichtung 5 einer Gasheizeinrichtung 6 zugeführt werden. In der Gasheizeinrichtung 6 wird das Gas auf eine vorgegebene Temperatur aufgeheizt. Sofern als Gasheizeinrichtung 6 ein Pebble-Heater verwendet wird, kann zur genauen Einstellung der Temperatur des ersten Gases eine zweite Gasentspannungseinrichtung 7 mit der Gasheizeinrichtung 6 verbunden sein. Die Gasheizeinrichtung 6 ist über ein thermisch isoliertes Rohr 8 mit der Ringdüse 3 verbunden. Bei der Ringdüse handelt es sich z.B. um eine Laval-Düse, bei der das erste Gas durch einen Ringspalt austritt, der konzentrisch eine den Schmelzstrahl freigebende Düse umgibt. Der Ringspalt ist zweckmäßigerweise möglichst nahe an der die Schmelze freigebenden Austrittsöffnung bzw. Düse angeordnet.

Mit den Bezugszeichen 9a sind erste Düsen und mit 9b zweite Düsen bezeichnet. Die ersten Düsen 9a dienen zur Beaufschlagung des Partikelstroms mit vorgeheiztem erstem Gas. Die Partikel werden dadurch in einer im wesentlichen horizontalen Flugbahn gehalten. Die Abkühlung und damit die Erstarrung werden verzögert, so daß sich sphärische Partikel ausbilden können.

Die zweiten Düsen 9b dienen zur Zufuhr von Kühlmittel. Bei dem Kühlmittel kann es sich um Gas, verflüssigtes Gas oder Wasser handeln. Die zweiten Düsen sind so ausgerichtet, daß der Partikelstrom von einer im wesentlichen horizontalen Flugbahn in eine vertikale Flugbahn umgelenkt wird. Ein konischer Auffangbehälter ist mit 10, ein Bodenabzug mit 11 bezeichnet. Zum Abtrennen der Feinstfraktion ist ein Zyklonabscheider 12 mit nachgeschalteter Kühlvorrichtung 13 vorgesehen. Die Funktion der Vorrichtung ist folgende:

Das erste Gas wird über die Gasentspannungseinrichtungen 5, bzw. 7 der Gasheizeinrichtung 6, zugeführt. Das erste Gas wird dort auf eine Temperatur im Bereich der Erstarrungs- bzw. oberhalb der Glasbildungstemperatur $T_s$ bzw. 1,5 $T_g$ des zu verdüsenden Materials aufgeheizt. Das aufgeheizte erste Gas gelangt über das thermisch isolierte Rohr 8 unter einem Druck von bis zu 50 bar in die Ringdüse 3. Es tritt dort unter einem Winkel von etwa 10-20° gegen den Schmelzstrahl aus. Der Schmelzstrahl wird durch die Einwirkung des ersten Gases zerstäubt. Das vorgeheizte erste Gas trägt die zerstäubten Partikel zunächst in horizontaler Richtung weiter. Zur Aufrechterhaltung der im wesentlichen horizontalen Flugbahn wird zusätzlich erstes Gas durch die ersten Düsen 9a in die Zerstäubungskammer 2 eingeblasen. Es kommt zur sphärischen Ausbildung der Partikel.

Die Partikel werden dann in einer Abkühlungszone abgekühlt. Die Abkühlungszone befindet sich in einem Bereich, in dem der Partikelstrom von einer horizontalen Flugbahn in eine vertikale Flugbahn abbiegt. Die Umlenkung der Flugbahn des Partikelstroms wird durch Kühlmittelströme unterstützt, die durch die zweiten Düsen 9b austreten.

Schließlich werden die hergestellten sphärischen Partikel im Auffangbehälter 10 aufgefangen und mit dem Bodenabzug 11 abgezogen. Mittels des Zyklonabscheiders 12 wird die Feinstfraktion abgetrennt. Ferner wird damit das heiße Gas abgeführt. Das heiße Gas wird über den Zyklonabscheider 12 stromabwärts nachgeschaltete Kühleinrichtungen abgekühlt bzw. rezyklierend zum Beheizen eines zweiten Pebble-Heaters genutzt.

Bezugszeichenliste:

1　　Schmelzvorrichtung

2 Zerstäubungskammer
3 Düse
4 Druckgasbehälter
5 erste Gasentspannungsstation
6 Gasheizeinrichtung
7 zweite Gasentspannungsstation
8 thermisch isoliertes Rohr
9a erste Düsen
9b zweite Düsen
10 Auffangbehälter
11 Bodenabzug
12 Zyklonabscheider
13 Kühlvorrichtung

## Patentansprüche

1. Verfahren zur Herstellung von aus im wesentlichen sphärischen Partikeln gebildeten Pulvern aus einem Material, wie Glas, Keramik oder Kunststoff, das eine hochviskose entweder bei einer Glasbildungstemperatur $T_g$ oder bei einer Erstarrungstemperatur $T_s$ erstarrende Schmelze bildet, mit folgenden Schritten:

 a) Herstellen einer Schmelze mit einer dynamischen Viskosität $\eta$ im Bereich zwischen 0,01 und 100 Ns/m$^2$,

 b) Verdüsen der Schmelze unter Verwendung eines ersten Gases, wobei das erste Gas am Austritt eines Ringspalts einer Ringdüse (3) mindestens eine Temperatur $T_A \geq T_g$ bzw. $\geq 0,5\ T_s$ hat, wobei der Ringspalt eine einen Schmelzstrahl freigebende Düse umgibt, und wobei der Anstellwinkel des ersten Gases in bezug zur Schmelzstrahlachse bis zu 25° beträgt,

 c) Abkühlen der beim Verdüsen gebildeten Partikel in einer stromabwärts der Ringdüse (3) nachgeschalteten Abkühlungszone unter Verwendung eines Kühlmittels, wobei die Temperatur des Kühlmittels < $T_g$ bzw. $T_s$ ist.

2. Verfahren nach Anspruch 1, wobei die Temperatur des ersten Gases $\geq 1,5\ T_g$ bzw. $\geq 1,0\ T_s$ ist.

3. Verfahren nach einem der vorhergehenden Ansprüche, wobei die Temperatur des ersten Gases am Austritt der Ringdüse (3) im Bereich von $\pm$ 100 K der Erstarrungstemperatur $T_s$ des Materials liegt.

4. Verfahren nach einem der vorhergehenden Ansprüche, wobei als erstes Gas Luft, Stickstoff, Edelgas, Sauerstoff oder ein Gemisch daraus verwendet wird.

5. Verfahren nach einem der vorhergehenden Ansprüche, wobei das erste Gas mittels eines Pebble-Heaters (6) vorgeheizt wird.

6. Verfahren nach einem der vorhergehenden Ansprüche, wobei der Durchsatz des ersten Gases auf einen Wert zwischen 0,1 und 10 m$^3$/min eingestellt wird.

7. Verfahren nach einem der vorhergehenden Ansprüche, wobei zur Zerstäubung der Druck des ersten Gases auf einen Wert von 1 bis 50 bar eingestellt wird.

8. Verfahren nach einem der vorhergehenden Ansprüche, wobei das erste Gas durch mindestens eine lavalartige Austrittsöffnung geführt wird.

9. Verfahren nach einem der vorhergehenden Ansprüche, wobei als Kühlmittel, vorzugsweise kryogenes verflüssigtes, zweites Gas oder Wasser verwendet wird.

10. Verfahren nach einem der vorhergehenden Ansprüche, wobei das Kühlmittel entgegen der Stromrichtung in Richtung der Ringdüse (3) eingeblasen wird.

11. Verfahren nach einem der vorhergehenden Ansprüche, wobei als weiteres Kühlmittel ein aus kryogenem verflüssigten Gas oder Wasser gebildetes Bad vorgesehen ist.

12. Verfahren nach einem der vorhergehenden Ansprüche, wobei ein stromabwärts der Ringdüse (3) in deren Nähe sich ausbildender Partikelstrom im wesentlichen horizontal geführt wird.

13. Verfahren nach Anspruch 12, wobei der Partikelstrom entfernt von der Ringdüse (3) in eine im wesentlichen vertikale Richtung umgelenkt wird.

14. Verfahren nach Anspruch 13, wobei die Führung und/oder Umlenkung des Partikelstroms durch das Einblasen von Kühlmittel unterstützt wird.

15. Verfahren nach einem der vorhergehenden Ansprüche, wobei das erste Gas, ggf. ein aus dem ersten Gas und dem Kühlmittel gebildetes Mischgas, abgeführt und zum Vorheizen eines zweiten Pebble-Heaters verwendet wird.

16. Verfahren nach einem der vorhergehenden Ansprüche, wobei der Anstellwinkel des ersten Gases in bezug zur Schmelzstrahlachse zwischen 10° und 20° beträgt.

17. Vorrichtung zur Durchführung des Verfahrens nach einem der vorhergehenden Ansprüche mit

aa) einer Einrichtung (6) zum Vorwärmen eines ersten Gases,

bb) einem Behälter (1) zur Aufnahme einer Schmelze,

cc) einer zu einem Zerstäubungsraum (2) weisenden im wesentlichen horizontal angeordneten Ringdüse (3), bei der eine einen Schmelzstrahl freigebende Düse von einem Ringspalt umgeben ist, durch den das erste Gas in einem Anstellwinkel von bis zu 25° in bezug zur Schmelzstrahlachse austritt,

dd) einer Einrichtung zum Kühlen eines stromabwärts der Ringdüse (3) sich ausbildenden Partikelstroms, und

ee) einer Einrichtung (9a, 9b) zum Führen und/oder Umlenken des Partikelstroms in eine im wesentlichen vertikale Richtung.

18. Vorrichtung nach Anspruch 17, wobei die Einrichtung (9a, 9b) zum Führen und/oder Umlenken wahlweise über einen vorgegebenen Abschnitt mit heißem ersten Gas beaufschlagbar ist.

19. Vorrichtung nach Anspruch 17 oder 18, wobei die Einrichtung zum Vorwärmen ein Pebble-Heater ist.

20. Vorrichtung nach einem der Ansprüche 17 bis 19, wobei die Breite des zum Austritt des ersten Gases vorgesehenen Ringspalts veränderbar ist.

21. Vorrichtung nach einem der Ansprüche 17 bis 20, wobei der Anstellwinkel des ersten Gases in bezug zur Schmelzstrahlachse zwischen 10° und 20° beträgt.

## Claims

1. A process for the production of powders, which are formed from substantially spherical particles, from materials, such as glass, ceramic or plastic, which forms a highly viscous melt, that solidifies either at a glass forming temperature $T_g$ or at a setting temperature $T_s$, comprising the following steps:

   a) producing a melt with a dynamic viscousity $\eta$ in the range between 0.01 and 100 Ns/m$^2$,

   b) atomizing the melt using a first gas, the first gas, at the outlet of a ring slit of a ring-nozzle (3), being at least at a temperature $T_A \geq T_g$ or $\geq 0,05 \, T_s$, whereby the ring slit surrounds a nozzle that releases molten jet, and the incident angle of the first gas with respect to the axis of the molten jet is up to 25°, and

   c) cooling the particles formed during the atomizing in a cooling zone, which is connected downstream of the ring-nozzle (3), using a coolant, the temperature of the coolant being < $T_g$ or $T_s$.

2. The process according to claim 1, in which the temperature of the first gas is $\geq 1.5 \, T_g$ or $\geq 1.0 \, T_s$.

3. The process according to claim one of the preceding claims, in which the temperature of the first gas at the outlet of the ring-nozzle (3) is within the range $\pm 100$ K of the setting temperature $T_s$ of the material.

4. The process according to one of the preceding claims, in which the first gas used is air, nitrogen, nobel gas, oxygen or a mixture thereof.

5. The process according to one of the preceding claims, in which the first gas is preheated by using a pebble heater (6).

6. The process according to one of the preceding claims, in which the throughput of the first gas is set to a value between 0,1 and 10 m$^3$/min.

7. The process according to one of the preceding claims, in which, for the atomization, the pressure of the first gas is set to a value from 1 to 50 bar.

8. The process according to one of the preceding claims, in which the first gas is passed through at least one Laval-like outlet opening.

9. The process according to one of the preceding claims, in which the coolant used is preferably cryogenic liquidized second gas or water.

10. The process according to one of the preceding claims, in which the coolant is blown in a counter flow direction towards the ring-nozzle (3).

11. The process according to one of the preceding claims, in which as a further coolant a bath formed from cryogenic liqudized gas or water is provided.

12. The process according to one of the preceding claims, in which a particle stream developing downstream in the vicinity of the ring-nozzle (3) is guided substantially horizontally.

13. The process according to claim 12, in which the particle stream at a distance from the ring-nozzle (3) is diverted in a substantially vertical direction.

14. The process according to claim 13, in which the guidance and/or diversion of the particle stream is assisted by blowning in coolant.

15. The process according to one of the preceding claims, in which the first gas, if appropriate a mixed gas of the first gas and the coolant, is discharged and used for preheating a second Pebble-heater.

16. The process according to in one of the preceding claims, in which the incident angle of the first gas with respect to the axis of the molten jet has a value between 10° und 20°.

17. A device for carring out the process according to one of the preceding claims having;

    aa) a device (6) for preheating a first gas,

    bb) a vessel (1) for taking up melt,

    cc) a substancially horizontally arranged ring-nozzle (3) facing to a atomization chamber (2) in which a melt releasing nozzle is surrounded by a ring slit, through which the first gas is discharged at an incident angle of up to 25 ° with respect to the axis of the molten jet,

    dd) a device for cooling a downstream of the ring-nozzle (3) developing particle stream, and

    ee) a device (9a, 9b) for guiding and/or diverting the particle stream in a substantially vertical direction.

18. A device according to claim 17, in which the device (9a, 9b) for guiding and/or diverting can be optionally provided along a predetermined section with hot first gas.

19. A device according to one of claim 17 or 18, in which the device for preheating is a Pebble heater.

20. A device according to one of claims 17 to 19, in which the width of the ring slit which serves as a discharge for the first gas is variable.

21. A device according to one of the claims 17 to 20, in which the incident angle of the first gas with respect to the axis of the molten jet has a value between 10° and 20°.

**Revendications**

1. Procédé de production de poudres, formées essentiellement de particules sphériques, d' un matériel comme le verre, la céramique ou le plastique, qui forme une fonte hautement visqueuse, qui se solidifie soit à une température de formation de verre $T_g$, ou à une température de solidification $T_s$, avec les étapes suivantes:

    a) Production d' une fonte avec une viscosité dynamique $\eta$ comprise entre 0,01 et 100 Ns/m$^2$,

    b) Atomisation de la fonte sous l' emploi d' un premier gaz, à l' occasion de quoi le premier gaz a, à la sortie de l' interstice annulaire d' une tuyère annulaire (3), au moins une température $T_A$ respectivement $\geq T_g$ et $\geq 0,5\ T_s$, où l' interstice annulaire ceint une tuyère libérant des jets d' fonte, et où l' angle d' incidence du premier gaz en rapport à l'axe de jet d' fonte atteint jusqu'à 25°,

    c) Refroidissement des particules formées lors de atomisation, dans une zone de refroidissement raccordée en série à l' aval de la tuyère annulaire (3), sous l' emploi d' un réfrigérant, à l' occasion de quoi la température du réfrigérant est respectivement $< T_g$ et $T_s$.

2. Procédé suivant la revendication 1, où la température du premier gaz est respectivement $\geq 1,5\ T_g$ et $\geq 1,0\ T_s$.

3. Procédé suivant l'une des revendications précédentes, où la température du premier gaz, à la sortie de la tuyère annulaire (3), est comprise entre $\pm$ 100 K de la température de solidification $T_s$ du matériel.

4. Procédé suivant l'une des revendications précédentes, où on emploie comme premier gaz de l' air, de l' azote, un gaz rare, de l 'oxygène, ou un mélange de ceux-ci.

5. Procédé suivant l'une des revendications précédentes, où le premier gaz est préchauffé au moyen d'un Pebble-Heater (6).

6. Procédé suivant l'une des revendications précédentes, où le débit du premier gaz est réglé à une valeur entre 0,1 et 10 m$^3$/min.

7. Procédé suivant l'une des revendications précédentes, où la pression du premier gaz est réglée à une valeur de 1 à 50 bar pour atomisation.

8. Procédé suivant l'une des revendications précédentes, où le premier gaz est conduit à travers au moins une sortie a la façon de Laval.

9. Procédé suivant l'une des revendications précédentes, où on emploie, comme réfrigérant, un second gaz, de préférence liquéfié cryogeniquement, ou de l'eau.

10. Procédé suivant l'une des revendications précédentes, où le réfrigérant est insufflé contre le sens du flux, en direction de la tuyère annulaire (3).

**11.** Procédé suivant l'une des revendications précédentes, où un bain de gaz liquéfié ou d'eau est prévu comme réfrigérant suivant.

**12.** Procédé suivant l'une des revendications précédentes, où un flux de particules se forme en aval de la tuyère annulaire (3) et est conduit essentiellement vers l'horizontale.

**13.** Procédé suivant la revendication 12, où le flux de particules, éloigné de la tuyère annulaire (3), est essentiellement orienté dans un sens vertical.

**14.** Procédé suivant la revendication 13, où la conduite et/ou l'orientation du flux de particules est soutenu par l'insufflation de réfrigérant.

**15.** Procédé suivant l'une des revendications précédentes, où le premier gaz, ou, au cas échéant, un gaz issu du mélange entre le premier gaz et le réfrigérant, est éloigné et employé pour le préchauffage d'un second Pebble-Heater.

**16.** Procédé suivant l'une des revendications précédentes, où l'angle d'incidence du premier gaz en rapport à l'axe de jet d'fonte atteint entre 10° et 20°.

**17.** Dispositif d'exécution du procédé suivant l'une des revendications précédentes avec

aa) une dispositif (6) pour préchauffage d'un premier gaz,

bb) un récipient (1) pour réception d'une fonte,

cc) une tuyère annulaire (3), disposée essentiellement horizontalement, donnant à une chambre de atomisation (2), sur laquelle une tuyère libérant des jets d'fonte est ceinte par un interstice annulaire, à travers lequel sort le premier gaz dans un angle d'incidence atteignant jusqu'à 25° en rapport à l'axe de jet d'fonte,

dd) une dispositif pour refroidissage d'un flux de particules se formant en aval de la tuyère annulaire (3), et

ee) une dispositif (9a, 9b) pour conduite et/ou orientation du flux de particules essentiellement dans un sens vertical.

**18.** Dispositif suivant la revendication 17, où l'dispositif (9a, 9b) pour conduite et/ou orientation est facultativement se occupée de par un premier gaz chaud à travers un passage donné.

**19.** Dispositif suivant la revendication 17 ou 18, où l'dispositif pour préchauffage est un Pebble-Heater.

**20.** Dispositif suivant l'une des revendications 17 à 19, où la largeur de l'interstice prévu pour la sortie du premier gaz est modifiable.

**21.** Dispositif suivant l'une des revendications 17 à 20, où l'angle d'incidence du premier gaz en rapport à l'axe de jet d'fonte atteint entre 10° et 20°.

*Fig. 1*

*Fig. 2*

*Fig. 3*